# EUROPEAN PATENT APPLICATION

(11) **EP 3 399 101 A1**
(43) Date of publication of application: **07.11.2018**
(21) Application number: 18170448.7
(22) Date of filing: 02.05.2018
(51) Int. Cl.: D21H 27/10, B65D 65/38, D21H 19/28, B65D 33/04, B65D 85/34, C09D 11/08

(54) **A MATERIAL FOR A BIODEGRADABLE PACKAGE**

(30) Priority: 03.05.2017 PL 42147917
(71) Applicant: SILBO Sp. z o.o., 44-240 Zory (PL)
(72) Inventor: Spiewok, Marcin, 44-203 Rybnik (PL)
(74) Representative: Trawinska, Urszula

(57) **Abstract**

A biodegradable package material in the form of a continuous strand, in which the continuous strand comprises paper coated at least on one side with a biodegradable polymer and the continuous strand comprises at least on one side a layer of print of biodegradable water paint, whose printable substrate is starch. The continuous strand can comprise openings of any shape with elements of a biodegradable film or mesh welded into them. The continuous strand can comprise alternating strands of paper and film and/or a biodegradable mesh.

A method for the production of package material for fruits and vegetables, wherein the continuous strand of paper is initially coated at least on one side with a biodegradable polymer and wound on a reel, in which the continuous strand is covered by a print of water paint, whose printable substrate is starch; subsequently, the layer with the print is subjected to drying by hot air in a temperature of 70°C - 90°C; subsequently, the continuous strand is wound on a reel and cut off. Openings of any shape are cut out with laser in the continuous strand and subsequently elements of a biodegradable film are welded into them, the heaters being applied on the side of the continuous strand.

## Description

The object of the invention is a material intended for the production of packages in the shape of bags for the confecting of products, mainly food products, in particular fruits and vegetables.
Fruits and vegetables sold in large self-service shops are previously confected into packages by their producer and delivered to the shop in such a form. This usually concerns vegetables like onion, potatoes, or fruit like, e.g. apples. This is convenient for both the seller in the shop as well as the buyer, sine the merchandise has already been weighed and packed. Polyethylene or polypropylene film and a composite of paper and film are used as package material. Food products transported and stored in such a manner require ventilation. This is why it is often combined with a perforated mesh or a vapour-permeable film, which not only provides ventilation, but also allows the buyer to see and touch merchandise present inside the package. Confecting takes place by machine, usually at the producer's place, in such a manner that the machine welds or glues into a tubular body, and subsequently welds or glues and cuts off the individual modules from a reel-fed, previously prepared continuous strand of film comprising proper prints and combined with strands or windows of the mesh. Fruits or vegetables are packed into a module created in this manner and subsequently the package with its contents is glued or welded.

Due to the increasing contamination of the environment with plastics which are difficult to dispose of, producers aim at eliminating plastics from packages and at providing their highest possible biodegradability and compostability. Biopolymers which produce similar results to polyethylene or polypropylene, are used instead of plastics. Cellulose film is used in the inspection windows of packages.
Prints on packages are made using alcohol-based paint which adheres well to polyolefin films or composites of film and paper. However, even when the construction of the package is biodegradable, the paint covering it does not exhibit such a feature.
Therefore, in state of the art there are known composites of package material where at least one of its layers or one of its elements is not biodegradable and the whole material is not suitable for composting.

The best known example of package material which is not biodegradable is described in European patent application EP2441698A1, which discloses a package created from a continuous strand, in which there are elongated continuous plastic strands of PE and elongated continuous mesh strands of PP. The individual strands overlap each other and in this place they are interconnected by means of an additional narrow strand of PE applied onto the mesh, which upon welding interconnects with the plastic strand of PE via the openings of the mesh.

An invention aiming at providing the biodegradability of the package is described in Polish application P.405448, where package material is in the form of a continuous strand of paper, at least on one side coated with polyolefin and nitrocellulose lacquer, interconnected by the welding method with the elements of cellulose film overlapping it. The polyolefin coating with nitrocellulose lacquer applied onto it enables merging the paper with the cellulose film (2) by means of the welding technique.

Another invention disclosing the use of biodegradable materials is described in Polish application P.419972, in which paper coated with a biopolymer in the form of polylactic acid (PLA) is used as a material in the form of a continuous strand, while elements of cellulose film or cellulose mesh are welded into the openings. This invention also discloses a material in the form of a continuous strand which comprises openings of any shape, with elements of a PE, PP, PLA or cellulose film welded into them in such a manner that the film directly overlaps the openings cut in the strand on the side coated with the polymer, creating a margin inside which the weld surface is located.

The object of the invention is to provide a package material for fruits and vegetables, which would be fully biodegradable and compostable, whose construction would allow its use in packaging machines used so far and which would provide high creative freedom when designing the shape of inspection openings, retaining its durability and print patterns.
The essence of the invention constitutes a biodegradable package material in the form of a continuous strand, in which the continuous strand comprises paper coated at least on one side with a biodegradable polymer, the continuous strand comprising at least on one side a layer of print of biodegradable water paint. The printable substrate of the water paint is starch. Preferably, the printable substrate of the biodegradable water paint is potato or corn starch. Preferably, the biodegradable polymer coating the paper is polylactic acid.
It is preferable for the layer of print to be discontinuous.
Preferably, the continuous strand comprises openings of any shape with elements of a PLA or cellulose film, or elements of a PLA mesh welded into them in such a manner that the film directly overlaps the openings cut in the strand on the side coated with the polymer, forming an overlap inside which the weld surface is located.
Preferably, the continuous strand with the layer of print comprises alternately at least one strand of paper and at least one strand of a PLA or cellulose film and/or a PLA mesh. The strands are interconnected by means of the welding method in such a manner that the film or mesh directly overlaps the strands of paper from the polymer-coated side, forming an overlap inside which the weld surface is located.
The essence of the invention also constitutes a method for the production of package material for fruits and vegetables, wherein the continuous strand of paper is initially coated at least on one side with a biodegradable polymer and wound on a reel, the continuous strand is subsequently unwound from the reel, covered by a print of water paint, whose printable substrate is starch; subsequently, the layer with the print is subjected to drying by hot air in a temperature of 70°C - 90°C. Subsequently, the continuous strand is wound on the reel and cut off.
In a preferable embodiment of the method according to the invention, upon applying the layer with the print, openings of any shape are cut out with laser in the continuous strand, into which the elements of a biodegradable film or PLA mesh elements are welded directly on the unprinted, polymer-coated side, in such a manner that a part of the film overlaps the continuous strand forming an overlap, and subsequently this part is subjected to welding in a temperature within a range of 180- 300 deg. C. The heaters which are applied from the side of the continuous strand have the shape of the opening, enlarged respectively to obtain a weld surface inside the overlap; subsequently, the continuous strand is wound on the reel and cut off.

In another preferable embodiment, upon applying the layer with the print, at least one continuous strand of paper is interconnected with at least one continuous strand of biodegradable film and/or a PLA mesh in such a manner that a part of the film or mesh overlaps the continuous strand of paper on the polymer-coated side, forming an overlap. Subsequently, this part is subjected to welding in a temperature within a range of 180- 300 deg. C, the heaters being applied on the side of the continuous strand in order to obtain a weld surface inside the overlap; subsequently, the continuous strand is wound on the reel and cut off.

The advantage of the invention is the full compostability of both the package material and the completed package. This constitutes a considerable contribution to the management of waste related to the everyday life of people and the protection of natural environment. The material and method of its production allow high discretion in designing the graphics of the package, which allows obtaining very appealing and original forms while retaining the previous methods for confecting and machines intended for this.

The invention is presented in the drawing, where:

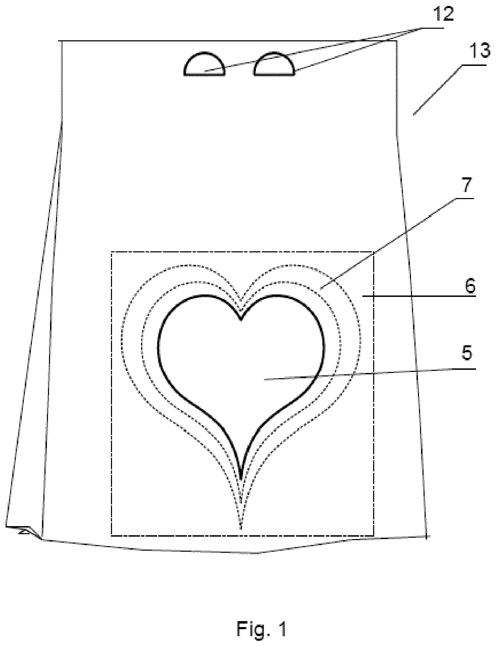

Fig. 1 - presents the view of a completed package upon filling and welding on a packaging machine with openings filled with the film

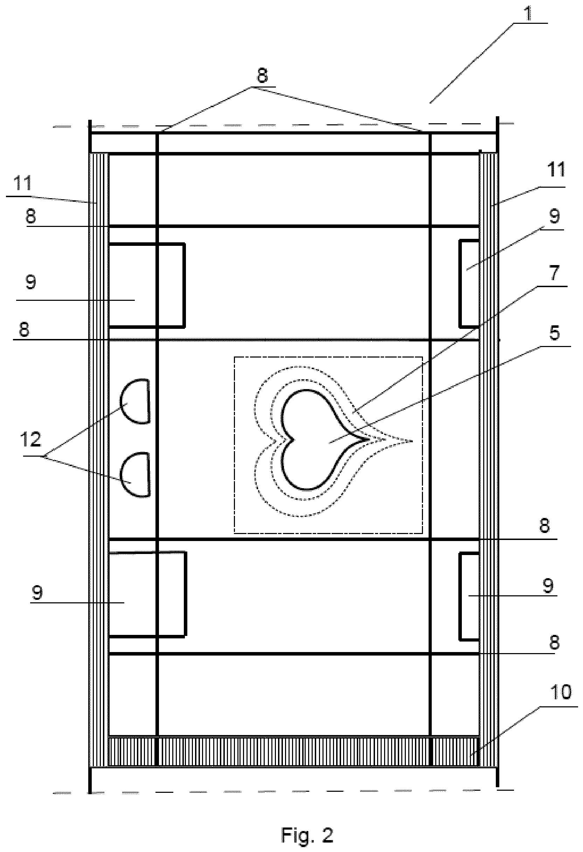

Fig. 2 - presents a fragment of the package material in the form of a continuous strand with an opening filled with the film
Fig. 3 - presents a fragment of a longitudinal section of the continuous strand in the place of the opening.

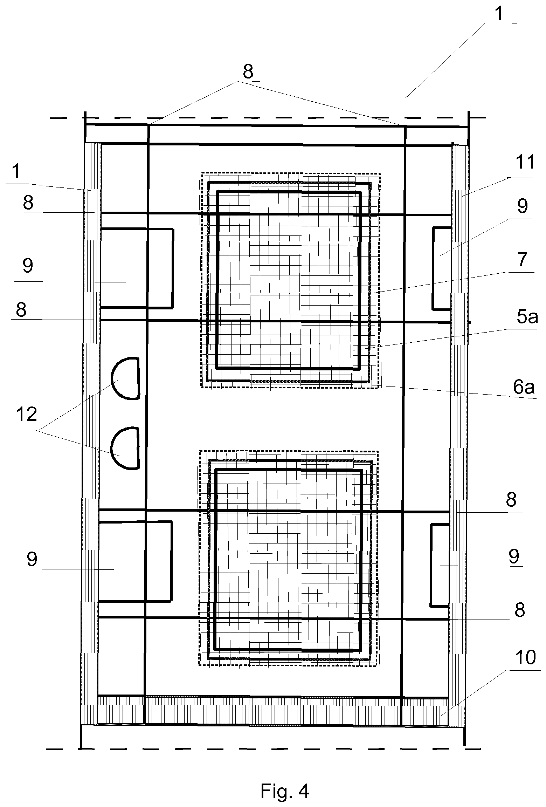

Fig. 4 - presents a fragment of the package material in the form of a continuous strand with an opening filled with the mesh
Fig. 5 - presents the view of a completed package upon filling and welding on a packaging machine with openings filled with the mesh
Fig. 6 - presents a fragment of the package material in the form of a continuous strand with alternating strands of mesh and paper positioned longitudinally
Fig. 7 - presents a fragment of the package material in the form of a continuous strand with alternating strands of mesh and paper positioned transversely

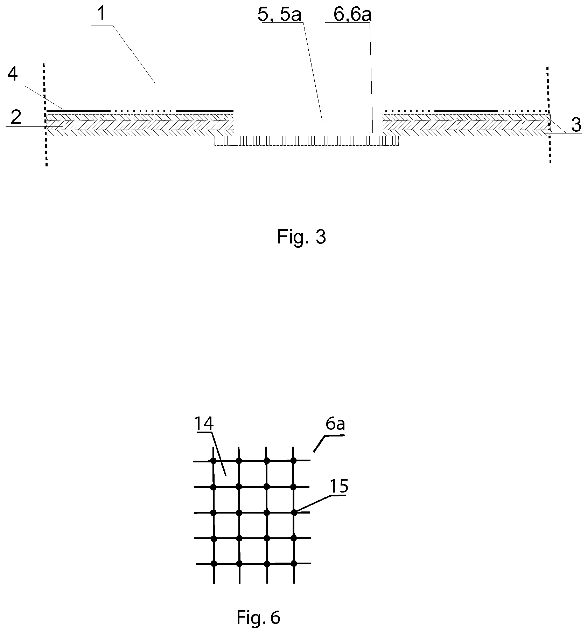

An embodiment of the invention constitutes a material in the form of a continuous strand **1** which constitutes paper coated on both sides with a biodegradable polymer, which in this embodiment constitutes polylactic acid (PLA) **2.** The continuous strand **1** is printed on the side not coated with PLA with a flexographic print with water paint **3**, whose printable substrate is potato starch. The print can be executed according to any design. The continuous strand **1** comprises openings **5** in the shape of, e.g. a heart, but this can be any other shape; on the side coated with PLA **3** the fragments of biodegradable film are welded into openings **5**, in this case this is a cellulose film **6**, covered with acrylic lacquer, which cover the openings **5,** forming overlaps. Inside the overlaps there are weld surfaces **7**, adjusted appropriately to the shape of the opening. The weld surface **7** generally has the shape of the opening **5**, except being appropriately enlarged to fit inside the overlap. The areas of vertical **10** and horizontal **11** weld and folding lines **8** for the completed package **13** are indicated on the fragment of the continuous strand **1.** On the fragment of the continuous strand **1** there are also indicated the areas of punched openings **12**, intended for the handles of the completed package **13**, as well as areas **9** which should remain unprinted in the print design, since they constitute the inner side of the foldings of the completed package **13.** The continuous strand **1** is wound on the reel which is subsequently used by a packing- welding machine.
In another embodiment, the biodegradable film welded into the openings **5** constitutes a polylactic acid (PLA) film.
In another embodiment, the fragments of PLA mesh **6a** are welded into the openings **5a.** The areal density of the mesh can amount to 20-30 g/m². For example, it can amount to 21.49 g/m² or 27.84 g/m². The openings **14** of the mesh have a size of 5.0 - 7.1 mm x 5.0 - 7.1 mm. For example, the mesh can have openings of 5.0 mm x 5.0 mm, or for example 7.1 mm x 7.1 mm. Two interconnected strands of PLA material constitute the weave **15** of the mesh. In this case the strands are fixedly interconnected by means of the weld method, forming a thickening in the place of interconnection (Fig. 6) at a right angle. The weave of the mesh can also have another interconnection; for example, the mesh strand can be woven and interconnected at an angle of 60° and 120°.
In another embodiment, the continuous strand **1** is coated with polylactic acid (PLA) only on one side, while the completed package **13** has no inner foldings. The completed package **13** has only the horizontal **11** and the vertical **10** weld. Elements of the film **6** are welded on the side coated with polylactic acid (PLA).

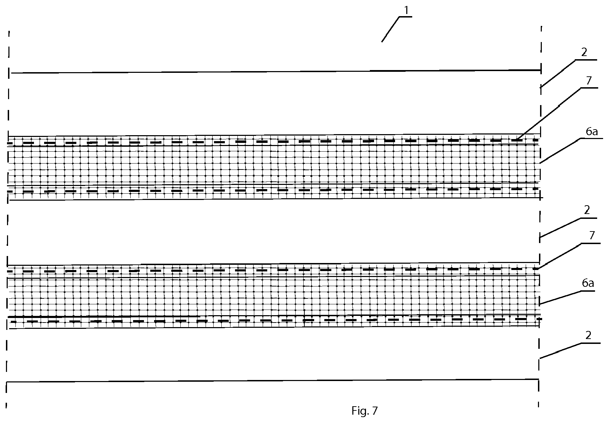

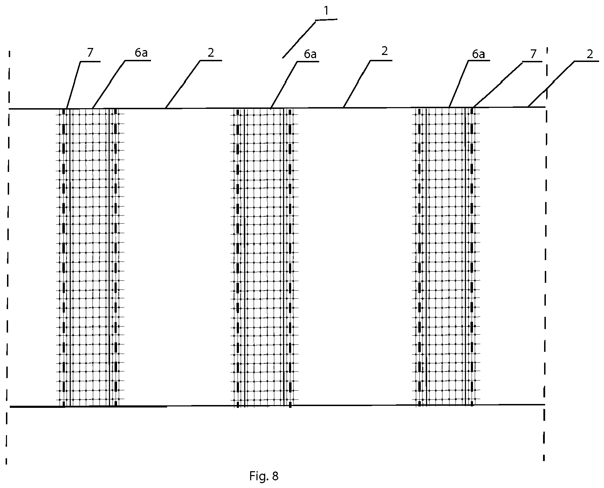

In another embodiment, the continuous strand **1** comprises strands of paper **2** described in the above-mentioned embodiments, interconnected longitudinally with the strands of the PLA mesh **6a** or the strands of the biodegradable film. The strands overlap each other, forming an overlap inside which the weld surface **7** is located (Fig. 7). In another version, the strands of paper **2** are interconnected alternately with the strands of the PLA mesh **6a** and the strands of the PLA film.
In another embodiment, the strands can also be interconnected transversely (Fig. 8).

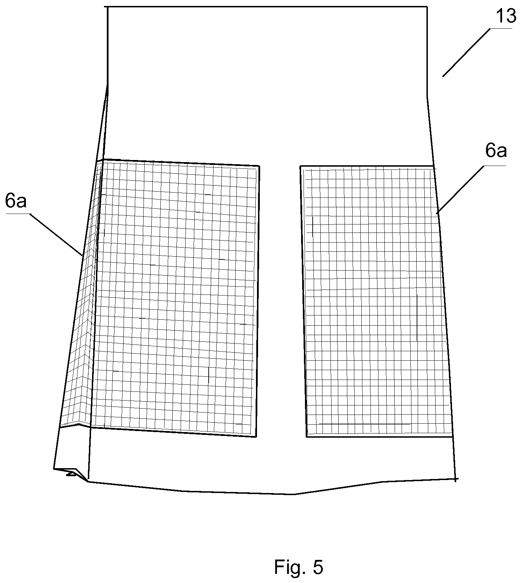

The completed package with two lateral windows filled with the PLA mesh **6a** is presented in Fig.5.
In an embodiment of the method for producing biodegradable package material for fruits and vegetables, the continuous strand of paper **2** is initially coated on both sides by a biodegradable polymer; in this case it is polylactic acid (PLA) **3**, and wound on a reel. The continuous strand **1** is subsequently unwound from the reel and covered with a water paint print **4,** whose printable substrate is potato or corn starch. The print is applied by means of the flexographic method, by machine, based on the design of a completed package **13.** The movement of the continuous strand **1** amounts to approx. 200 m/min. Subsequently, the layer with the print is subjected to drying in hot air in a temperature of 70°C - 90°C. Upon applying the layer with the print, openings **5** of any shape are cut out with laser in the continuous strand **1**, into which the elements of a cellulose film **6** are welded directly on the unprinted, polymer-coated side in such a manner that a part of the cellulose film **6** overlaps the continuous strand **1** forming an overlap, and subsequently this part is subjected to welding in a temperature within a range of 180- 300 deg. C. The film is fed from a reel adjusted to the size of openings and planned overlaps, cut and applied onto the continuous strand **1.** The heaters welding the cut and applied cellulose film **6** are applied from the side of the continuous strand **1.** The heaters have the shape of the opening **5** appropriately enlarged to obtain a weld surface **7** inside the overlap. Finally, the continuous strand is wound on the reel and cut off.

In another embodiment of the method according to the invention, a polylactic acid (PLA) film constitutes the biodegradable film.

In another embodiment, the elements of the PLA mesh are welded into openings cut with laser, in a manner analogical to the previous embodiment.

In another embodiment, upon applying the layer with the print, three continuous strands of paper **2** are interconnected alternately with two continuous strands of biodegradable film in such a manner that a part of the film **6** overlaps the continuous strand of paper **2** from the polymer-coated side, forming an overlap, and subsequently this part is subjected to continuous welding in a temperature within a range of 180 - 300 deg. C, the heaters in the form of rollers being applied on the side of the continuous strand in order to obtain a weld surface **7** inside the overlap, while the continuous strand **1** moves in relation to the rollers, is wound on the reel and cut off.

In another embodiment, strands of PLA mesh **6a** are welded instead of the above-mentioned film. The remaining operations are analogical.
In another embodiment, the strands are interconnected transversely, alternately - the strand of paper 2 and the strand of mesh 6a. The heaters are then applied inside the weld surface. The shape of heaters corresponds to the weld surface.
The invention is useful in food industry and in logistics.

### List of references

- 1.: continuous strand
- 2.: paper
- 3.: polylactic acid PLA
- 4.: water paint
- 5.: opening for the film
5a. Opening for the mesh
- 6.: cellulose film, PLA film
6a. PLA mesh
- 7.: weld surface
- 8.: folding line
- 9.: unprinted area
- 10.: vertical weld area
- 11.: horizontal weld area
- 12.: punched openings
- 13.: package
- 14.: mesh opening
- 15.: mesh weave

## Claims

1. A package material in the form of a continuous strand, in which the continuous strand comprises paper at least on one side coated with a biodegradable polymer, **characterised in that** the continuous strand comprises at least on one side a layer of print of biodegradable water paint, whose printable substrate is starch.

2. The material according to claim 1, **characterised in that** the printable substrate of biodegradable water paint is potato or corn starch.

3. The material according to claim 1, **characterised in that** the biodegradable polymer coating the paper is polylactic acid.

4. The material according to claim 1, **characterised in that** the layer of print is discontinuous.

5. The material according to any of claims 1 - 4, **characterised in that** the continuous strand comprises openings of any shape with elements of a PLA or cellulose film or elements of a PLA mesh welded into them in such a manner that the film or mesh directly overlaps the openings cut in the strand on the side coated with the polymer, forming an overlap inside which the weld surface is located.

6. The material according to any of claims 1 - 4, **characterised in that** the continuous strand with a layer of print comprises alternately at least one strand of paper and at least one strand of a PLA or cellulose film and/or a PLA mesh, wherein the strands are interconnected by means of the welding method in such a manner that the film or mesh directly overlaps the strand of paper from the side coated with the polymer, forming an overlap inside which the weld surface is located.

7. A method for the production of a material in the form of a continuous strand for packages of fruits and vegetables, wherein the continuous strand of paper is initially coated at least on one side with a biodegradable polymer and wound on a reel, **characterised in that** the continuous strand is subsequently unwound from the reel, covered by a print of water paint, whose printable substrate is starch; subsequently, the layer with the print is subjected to drying by hot air in a temperature of 70°C - 90°C; subsequently, the continuous strand is wound on the reel and cut off.

8. The method for the production of a biodegradable material according to claim 7, **characterised in that** upon applying the layer with the print, openings of any shape are cut out with laser in the continuous strand, into which the elements of a biodegradable film or PLA mesh elements are welded directly on the unprinted, polymer-coated side, in such a manner that a part of the film or mesh overlaps the continuous strand, forming an overlap, and subsequently this part is subjected to welding in a temperature within a range of 180 - 300 deg. C, the heaters which are applied on the side of the continuous strand having the shape of the opening, enlarged respectively to obtain a weld surface inside the overlap; subsequently, the continuous strand is wound on the reel and cut off.

9. The method for the production of a biodegradable material according to claim 7, **characterised in that** upon applying the layer with the print, at least one continuous strand of paper is interconnected with at least one continuous strand of biodegradable film and/or a PLA mesh in such a manner that a part of the film or mesh overlaps the continuous strand of paper on the polymer-coated side, forming an overlap, and subsequently this part is subjected to welding in a temperature within a range of 180 - 300 deg. C, the heaters being applied on the side of the continuous strand in order to obtain a weld surface inside the overlap; subsequently, the continuous strand is wound on the reel and cut off.
